# EUROPEAN PATENT APPLICATION

(11) **EP 4 575 772 A1**
(43) Date of publication of application: **25.06.2025**
(21) Application number: 23865910.6
(22) Date of filing: 15.09.2023
(51) Int. Cl.: G06F 9/38, G06F 9/48, G06F 13/16, G06N 3/063, G06F 8/41, G06F 9/30

(54) **ELECTRONIC DEVICE COMPRISING NEURAL PROCESSING UNIT, AND OPERATING METHOD THEREFOR**

(30) Priority: 16.09.2022 KR 20220117069; 13.10.2022 KR 20220131586
(71) Applicant: Samsung Electronics Co., Ltd., Suwon-si, Gyeonggi-do 16677 (KR)
(72) Inventor: PARK, Hyunbin, Suwon-si Gyeonggi-do 16677 (KR); CHOI, Bumkeun, Suwon-si Gyeonggi-do 16677 (KR); CHOI, Jin, Suwon-si Gyeonggi-do 16677 (KR)
(74) Representative: Gulde & Partner
(86) International application number: PCT/KR2023/013962
(87) International publication number: WO 2024/058615

(57) **Abstract**

An electronic device according to various embodiments may comprise: a memory and a processor operatively connected to the memory. The processor can include: a central processing unit including a cache memory; a neural processing unit; and an interconnector connected to the neural processing unit. The central processing unit can include an arbiter for connecting the cache memory to any one of a processing circuit of the central processing unit and the interconnector. The neural processing unit can exchange data with the cache memory through the arbiter. Other various embodiments are possible.

## Description

### [Technical Field]

The disclosure relates to an electronic device including a neural processing unit, and an operating method therefor.

### [Background Art]

With the development of artificial intelligence technology, the artificial intelligence technology can be applied to various fields. Among them, deep learning related to the artificial intelligence technology requires high computing performance, more memory occupancy, and high power consumption for hardware devices and therefore, when the deep learning is applied to mobile terminal applications or data sensor services, a large load can be applied.

Neural network model technology can reduce energy consumption and inference delay by using a neural network chip (e.g., neural network processing unit (NPU), tensor processing unit (TPU), and field programmable gate array (FPGA)).

An electronic device (e.g., smartphone) can include an application processor (AP). An AP chip can have built-in subsystems (e.g., CPU, GPU and NPU) connected by a bus. The AP chip or the subsystems inside the AP chip can connect to and communicate with a memory (e.g., dynamic random access memory) outside the AP chip.

In order to execute a neural network model, a central processing unit and a neural network chip can perform communication with each other. For example, automatic speech recognition needs to rapidly process speech recognition from voice streaming. However, since time is taken to initialize an NPU, the central processing unit can perform a first half of a process for performing the automatic speech recognition during the time taken to initialize the NPU. The central processing unit can transfer the result of processing the first half of the automatic speech recognition process, to the NPU. The NPU can process a second half of the automatic speech recognition process, based on the transferred result.

### [Disclosure of Invention]

### [Solution to Problem]

An electronic device of an embodiment may include a memory, and a processor operatively connected to the memory. The processor may include a central processing unit including a cache memory, a neural network processing unit, and an interconnect connected to the neural network processing unit. The central processing unit may include an arbiter for connecting the cache memory to any one of a processing circuit of the central processing unit or the interconnect. The neural network processing unit may be configured to exchange data with the cache memory through the arbiter

An operating method of an electronic device of an embodiment may include executing neural network computation by a neural network processing unit of the electronic device. The method may include controlling an arbiter included in a central processing unit of the electronic device to connect a cache memory of the central processing unit to an interconnect connected to the neural network processing unit. The method may include receiving data for performing the executed neural network computation by the neural network processing unit, from the cache memory through the arbiter, or transmitting the data to the cache memory through the arbiter.

A processor of an embodiment may include a central processing unit including a cache memory, a neural network processing unit, and an interconnect connected to the neural network processing unit. The central processing unit may include an arbiter for connecting the cache memory to any one of a processing circuit of the central processing unit or the interconnect. The neural network processing unit may be configured to exchange data with the cache memory through the arbiter.

### [Brief Description of Drawings]

FIG. 1 is a block diagram of an electronic device in a network environment according to various embodiments.
FIG. 2 is a block diagram illustrating a construction of an electronic device according to an embodiment.
FIG. 3 is a block diagram illustrating a construction of a processor including a plurality of core processors according to an embodiment.
FIG. 4 is a flowchart illustrating a process in which an electronic device operates according to an embodiment.
FIG. 5 is a flowchart illustrating a process of performing an operation including pre-processing for performing neural network computation in an electronic device according to an embodiment.
FIG. 6 is a flowchart illustrating a process for performing computation on a computation layer included in a neural network model by a core processor of a central processing unit of an electronic device according to an embodiment.
FIG. 7 is a flowchart illustrating a process for performing computation on a next computation layer by a neural network processing unit, based on the result of computation on a computation layer performed by a core processor of a central processing unit of an electronic device according to an embodiment.
FIG. 8 is a diagram illustrating an operation of a central processing unit and a neural network processing unit while performing computation for processing a neural network model according to an embodiment.
FIG. 9 is a flowchart illustrating a process of compiling a file for executing a neural network model by an electronic device according to an embodiment.

### [Mode for the Invention]

When some computation layers in a neural network include an operation that may not be performed by a neural network processing unit configured to process a neural network model, some computation layers may be performed by a central processing unit. In order for the central processing unit to process some computation layers while processing another process, an interrupt operation should be performed by an interrupt controller. Therefore, overhead for the interrupt controller may occur.

Overhead for memory access may occur in a procedure of writing data to a memory (e.g., dynamic random access memory) and reading data stored in the memory in a procedure of communication between the central processing unit and the neural network processing unit. When the overhead for the memory access occurs, it may take tens to hundreds of cycles due to at least one of overhead due to an L1 cache, an L2 cache, an L3 cache, a bus, and a last level cache (LLC), a delay due to a dynamic random access memory (DRAM) controller that collects and schedules a DRAM access request, off-chip access, a delay due to a decoder inside DRAM, and a delay due to internal DRAM scheduling.

In order for the central processing unit to, while being performing another process, perform computation on a computation layer in a neural network model that is being performed by the neural network processing unit, the central processing unit may need to switch a process that is being performed by the central processing unit to a process for processing the computation layer. In order to switch the process, time (for example, about 100 cycles) for writing register values of the central processing unit to a memory and retrieving register values of another process written to the memory may be required. The operation of switching the process that is being performed to another process may be referred to as context switching.

Due to overhead occurring in am interrupt controller, overhead for memory access, or context switching, a delay may occur in a procedure in which the central processing unit and the neural network processing unit process a neural network model in conjunction with each other.

The technical task to be achieved in this document is not limited to the technical task mentioned above, and other technical tasks not mentioned may be clearly understood by those skilled in the art to which the disclosure pertains from the following description.

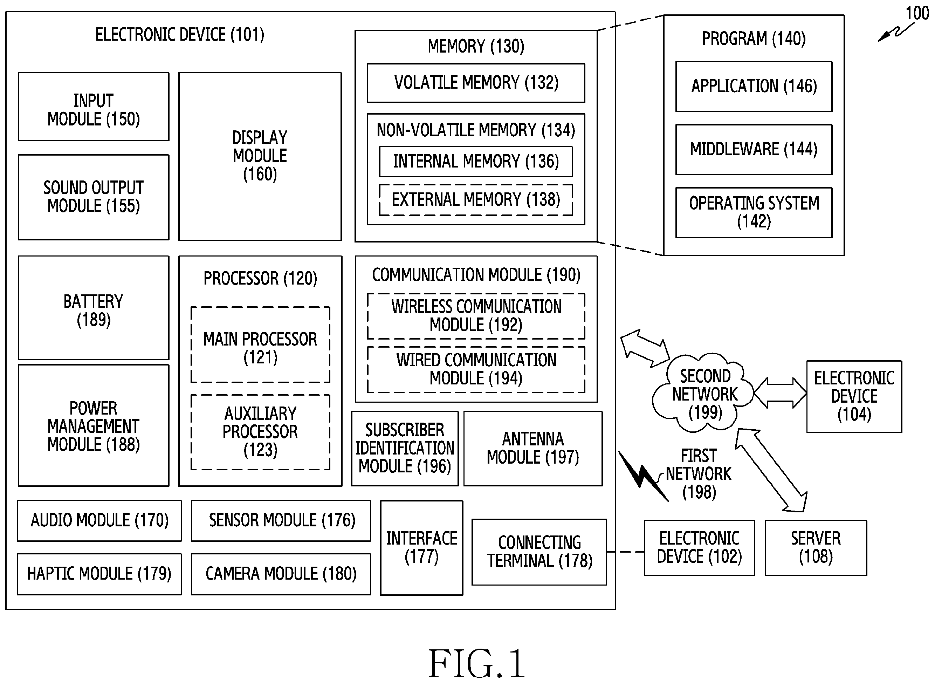

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

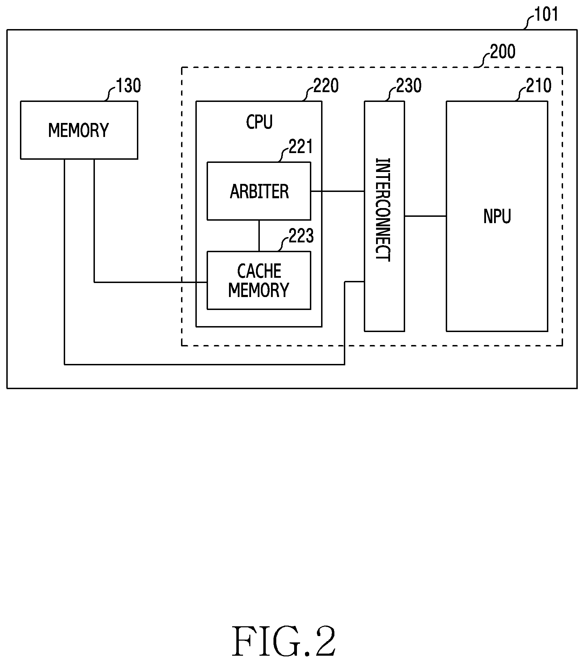

FIG. 2 is a block diagram illustrating a construction of an electronic device 101 according to an embodiment.

An electronic device 101 of an embodiment may include a memory 130 and a processor 200 (e.g., processor 120 of FIG. 1 and main processor 121 of FIG. 1). The processor 200 may include, for example, an application processor, which is a system semiconductor that performs the driving of various application programs, graphic processing, etc. in the electronic device 101. The processor 200 may include a neural network processing unit 210 and a central processing unit 220. The neural network processing unit 210 may include a device configured to efficiently process parallel computations and process a neural network model. The neural network processing unit 210 may be configured to perform a plurality of simple computations in parallel compared to the central processing unit 220. The central processing unit 220 may be configured to perform complex computations in series compared to the neural network processing unit 210.

The neural network processing unit 210 and the central processing unit 220 of an embodiment may be integrated into the processor 200. The processor 200 of an embodiment may be configured to communicate the neural network processing unit 210 with the central processing unit 220. For example, the processor 200 may be configured wherein the neural network processing unit 210 transmits or receives data to or from the central processing unit 220 without going through the memory 130.

The neural network processing unit 210 may be connected to an interconnect 230. The interconnect 230 may be configured to connect the neural network processing unit 210 to an arbiter 221 of the central processing unit 220. For example, the interconnect 230 may be connected to the neural network processing unit 210 and the central processing unit 220 through a physical interface (e.g., bus). The central processing unit 220 may include the arbiter 221 and a cache memory 223. The arbiter 221 may be configured to selectively connect the cache memory 223 to either a processing circuit for allowing the central processing unit 220 to process data or the interconnect 230. The arbiter 221 may include a circuit configured to perform a function presented in the disclosure, or a functional block implemented by the central processing unit 220.

The neural network processing unit 210 and the central processing unit 220 may store data in the cache memory 223 through the arbiter 221, or retrieve data stored in the cache memory 223. For example, the cache memory 223 may include a level-1 (L1) cache memory and a level-2 (L2) cache memory. For example, the L1 cache memory may have a faster input/output speed than the L2 cache memory. In particular, since the neural network processing unit 210 may access the L1 cache memory of the central processing unit 220 through the arbiter 221 and the interconnect 230, a delay occurring for accessing the memory 130 (e.g., DRAM) may be reduced. The neural network processing unit 210 or the central processing unit 220 may store data in the cache memory 223 or retrieve data from the cache memory 223 and exchange data with each other.

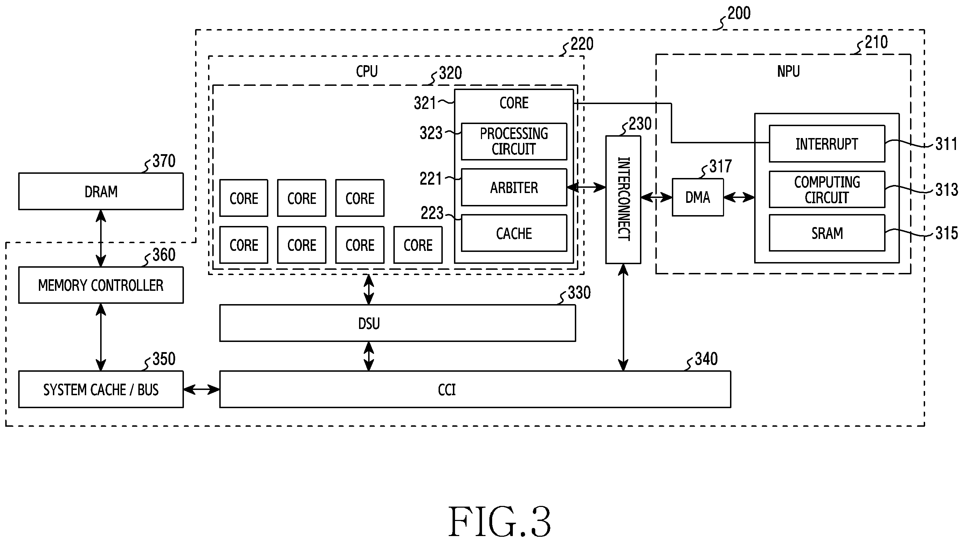

FIG. 3 is a block diagram illustrating a construction of a processor 200 including a plurality of core processors 320 according to an embodiment.

A processor 200 of an embodiment may include a neural network processing unit 210, a central processing unit 220, an interconnect 230, a dynamic shared unit (DSU) 330, a cache coherent interconnect (CCI) 340, a system cache / bus 350, and a memory controller 360. However, FIG. 3 is for explaining an example of a construction of the processor 200 of an embodiment, and some components may be replaced with other components or be omitted. The names (e.g., dynamic shared unit, cache coherent interconnect) used in FIG. 3 are for explaining the components separately, and the names themselves do not limit the characteristics of the components.

The central processing unit 220 of the electronic device 101 may include a plurality of core processors 320. Among the plurality of core processors 320, at least one core processor 321 may be configured to perform neural network computation for performing a neural network model in conjunction with the neural network processing unit 210.

The at least one core processor 321 may include an arbiter 221, a cache memory 223, and a processing circuit 323. The cache memory 223 may include a memory temporarily storing data for fast data access. For example, the cache memory 223 may include an L1 cache memory and an L2 cache memory. However, the structure of the cache memory 223 is not limited thereto. The processing circuit 323 may be configured to perform computation, based on input data. The arbiter 221 may connect the cache memory 223 to the processing circuit 323 or the interconnect 230.

The neural network processing unit 210 may include an interrupt controller 311, a computing circuit 313, or static random access memory 315. The interrupt controller 311 may control an interrupt occurring in a computation procedure of the neural network processing unit 210. The interrupt controller 311 may be connected to the at least one core processor 321 of the central processing unit 220 and transfer an interrupt signal to the at least one core processor 321. For example, the interrupt controller 311 may be physically directly connected to the central processing unit 220. The computing circuit 313 may perform computation of the neural network processing unit 210. The static random access memory 315 may store data that is used for computation performed by the neural network processing unit 210. For example, the static random access memory 315 may store information that is input to a computation layer included in a neural network model. The neural network processing unit 210 may include a direct memory access (DMA) 317. The direct memory access 317 may be configured to transmit or receive data to or from the arbiter 221 via the interconnect 230. Data transferred between the neural network processing unit 210 and the central processing unit 220 may include feature information (e.g., feature map) that is input to or output from the neural network model. The direct memory access 317 may perform conversion between a first data format (e.g., INT8) used in the neural network processing unit 210 and a second data format (e.g., FP32) used in the central processing unit 220.

The dynamic shared unit 330 may be connected to the central processing unit 220. The dynamic shared unit 330 may include a cache coherency control circuit that maintains cache coherency between the plurality of core processors 320. In addition, the dynamic shared unit 330 may further include an L3 cache memory presented to the central processing unit 220. The dynamic shared unit 330 may allocate a core processor for executing a process among the plurality of core processors 320. When at least one core processor 321 is exclusively used by a process performed in conjunction with the neural network processing unit 210, the dynamic shared unit 330 may allocate another process to another core processor except for the at least one core processor 321. According to an embodiment, even when the at least one core processor 321 is not exclusively used by the process performed in conjunction with the neural network processing unit 210, the at least one core processor 321 may be allocated a process at a low priority.

The cache coherency interconnect 340 may be connected to a plurality subsystems. For example, the cache coherency interconnect 340 may be connected to the interconnect 230 and the dynamic shared unit 330. The cache coherency interconnect 340 may include a bus that maintains cache coherency between the plurality of subsystems connected. The cache coherency interconnect 340 may be connected to the memory controller 360 via the system cache / bus 350. The memory controller 360 may access dynamic random access memory 370 (e.g., memory 130 of FIG. 2) and store data in or retrieve data from the dynamic random access memory 370.

When the arbiter 221 connects the cache memory 223 to the processing circuit 323, and the processing circuit 323 transmits data to be stored in a shared memory area of the DRAM 370, the data may remain in the cache memory 223 (e.g., L1 cache) while going through the cache memory 223 in a procedure of transferring the data to the DRAM 370. When the arbiter 221 connects the cache memory 223 to the interconnect 230, and the direct memory access 317 loads data stored in the shared memory area of the DRAM 370, data stored in the cache memory 22 may be loaded. Accordingly, the data may be transferred from the central processing unit 220 to the neural network processing unit 210 without performing an operation of accessing the DRAM 370.

Conversely, when the arbiter 221 connects the cache memory 223 to the interconnect 230, and the direct memory access 317 transmits data to be stored in the shared memory area of the DRAM 370, the data may remain in the cache memory 223 (e.g., L1 cache) while going through the cache memory 223 in a procedure of transferring the data to the DRAM 370. When the arbiter 221 connects the cache memory 223 to the processing circuit 323, and the processing circuit 323 loads data stored in the shared memory area of the DRAM 370, data stored in the cache memory 223 may be loaded. Accordingly, the data may be transferred from the neural network processing unit 210 to the central processing unit 220 without performing an operation of accessing the DRAM 370.

When at least one core processor 321 is not connected to the neural network processing unit 210 through the interconnect 230 and the arbiter 221, the central processing unit 220 may write data to the DRAM 370 via the DSU 330, the CCI 340, the system cache / bus 350, and the memory controller 360. The neural network processing unit 210 may need to receive data from the central processing unit 220 by reading the data from the DRAM 370 via the CCI 340, the system cache / bus 350, and the memory controller 360. Here, a delay may occur by sending and receiving data through the DRAM 370. However, according to an embodiment, by allowing the at least one core processor 321 and the neural network processing unit 210 to exchange data with each other without going through the DRAM 370 (for example, by exchanging data through the cache memory 223), a delay occurring in a procedure of switching a subject that computes a computation layer included in a neural network model may be reduced.

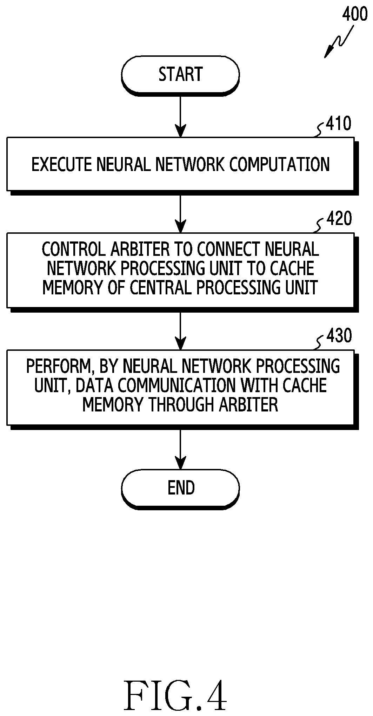

FIG. 4 is a flowchart 400 illustrating a process in which an electronic device (e.g., electronic device 101 of FIGS. 1 and 2) operates according to an embodiment.

In operation 410, an electronic device (e.g., electronic device 101 of FIGS. 1 and 2) may execute neural network computation, based on a neural network model. For example, a central processing unit (e.g., central processing unit 220 of FIGS. 2 and 3) of the electronic device (e.g., electronic device 101 of FIGS. 1 and 2) may perform pre-processing for performing neural network computation, and initialize a neural network processing unit (e.g., neural network processing unit 210 of FIGS. 2 and 3).

In operation 420, the electronic device (e.g., electronic device 101 of FIGS. 1 and 2) may control an arbiter (e.g., arbiter 221 of FIGS. 2 and 3) to connect the neural network processing unit (e.g., neural network processing unit 210 of FIGS. 2 and 3) to a cache memory (e.g., cache memory 223 of FIGS. 2 and 3) of the central processing unit (e.g., central processing unit 220 of FIGS. 2 and 3).

In operation 430, the electronic device (e.g., electronic device 101 of FIGS. 1 and 2) may allow the neural network processing unit (e.g., neural network processing unit 210 of FIGS. 2 and 3) to perform communication with the cache memory (e.g., cache memory 223 of FIGS. 2 and 3) of the central processing unit through the arbiter (e.g., arbiter 221 of FIGS. 2 and 3). Here, the neural network processing unit (e.g., neural network processing unit 210 of FIGS. 2 and 3) may read data from the cache memory (e.g., cache memory 223 of FIGS. 2 and 3) of the central processing unit. The neural network processing unit (e.g., neural network processing unit 210 of FIGS. 2 and 3) may read data written to the cache memory (e.g., cache memory 223 of FIGS. 2 and 3) by the central processing unit (e.g., central processing unit 220 of FIGS. 2 and 3), whereby the data may be transferred from the central processing unit (e.g., central processing unit 220 of FIGS. 2 and 3) to the neural network processing unit (e.g., neural network processing unit 210 of FIGS. 2 and 3).

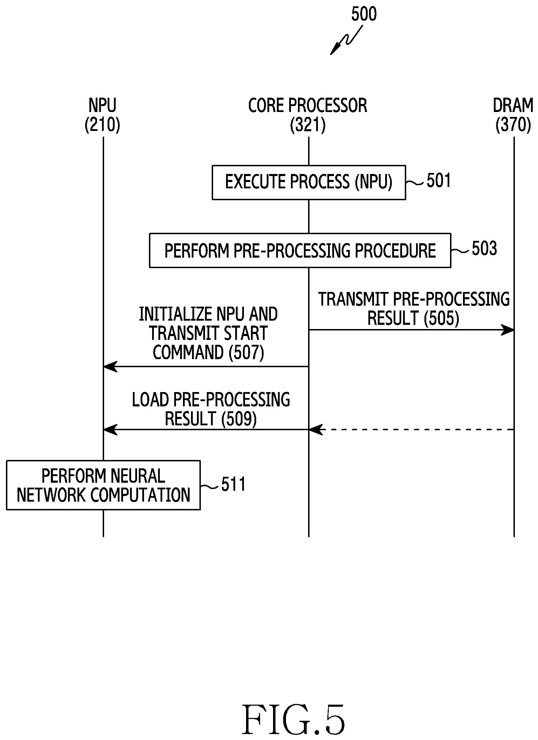

FIG. 5 is a flowchart 500 illustrating a process for performing an operation including pre-processing for performing neural network computation by an electronic device (e.g., electronic device 101 of FIGS. 1 and 2) according to an embodiment.

In operation 501, at least one core processor 321 may execute a process (NPU) for performing neural network computation in conjunction with a neural network processing unit 210. According to an embodiment, the at least one core processor 321 may be exclusively used by the process for performing in conjunction with the neural network processing unit 210. An electronic device (e.g., electronic device 101 of FIGS. 1 and 2) may determine whether the process for performing in conjunction with the neural network processing unit 210 will exclusively use the at least one core processor 321, based on a parameter defining whether to exclusively use the at least one core processor 321. The parameter may be configured as a value included in a file for executing a neural network model. When the at least one core processor 321 exclusively executes the process for performing in conjunction with the neural network processing unit 210, a delay due to context switching may be reduced.

When the parameter is a first value, the process for performing in conjunction with the neural network processing unit 210 may exclusively use the at least one core processor 321. For example, when a value of a parameter AF_NPU is ON, the process for performing in conjunction with the neural network processing unit 210 may exclusively use the at least one core processor 321. When the parameter is a second value different from the first value, the at least one core processor 321 may further perform another process. For example, when the value of the parameter AF_NPU is OFF, the at least one core processor 321 may further perform another process.

In operation 503, the at least one core processor 321 may perform a pre-processing operation on input data to be input to the neural network model. For example, when sentences composed of natural language are to be processed using a neural network model for performing natural language processing, since the sentences may not be directly input to the neural network model, the core processor 321 may perform at least one of an operation of tokenizing the sentences by the unit of sentence, an operation of tokenizing the sentences by the unit of word, or an operation of tokenizing the sentences by the unit of character. The pre-processing operation may be configured in various ways depending on the neural network model.

In operation 505, the at least one core processor 321 may transmit the pre-processing result obtained in operation 503 to the DRAM 370. Referring to FIG. 3, the pre-processing result may be transferred to the DRAM 370 via a path (e.g., DSU 330, CCI 340, system cache / bus 350, and memory controller 360 of FIG. 3) going from the arbiter 221, the cache memory 223, and a central processing unit (e.g., central processing unit 220 of FIGS. 2 and 3) to the DRAM 370. The arbiter 221 may transfer the pre-processing result obtained by the processing circuit 323 to the cache memory 223. In a procedure in which the pre-processing result is transferred to the DRAM 370 in operation 505, the pre-processing result may be written to the cache memory 223 (e.g., L1 cache).

In operation 507, the at least one core processor 321 may initialize the neural network processing unit 210 and transfer a start command for neural network computation to the neural network processing unit 210. After transferring the start command to the neural network processing unit 210, the at least one core processor 321 may wait until an interrupt signal is received from the neural network processing unit 210. When the at least one core processor 321 is exclusively used by the process for performing in conjunction with the neural network processing unit 210, the at least one core processor 321 may not perform context switching.

In operation 509, the neural network processing unit 210 may load the pre-processing result. For example, referring to FIG. 3, a direct memory access (e.g., direct memory access 317 of FIG. 3) of the neural network processing unit 210 may attempt to access the pre-processing result stored in a shared memory area of the DRAM 370. Here, when the neural network processing unit 210 executes an instruction allowing to access an address where data is written to the DRAM 370, the pre-processing result may actually be loaded from the cache memory (e.g., cache memory 223 of FIG. 2 or 3) (e.g., L1 cache) of the core processor 321 to SRAM (e.g., SRAM 315 of FIG. 3). The arbiter (e.g., arbiter 221 of FIG. 2 or 3) may transfer the pre-processing result read from the cache memory (e.g., cache memory 223 of FIG. 2 or 3), to the neural network processing unit 210 through an interconnect (e.g., interconnect 230 of FIG. 2 or 3). Therefore, the pre-processing result may be quickly loaded through a direct path from the cache memory (e.g., L1 cache) to the SRAM (e.g., SRAM 315 of FIG. 3), without dynamic random access memory accessing overhead.

In operation 511, the neural network processing unit 210 may perform neural network computation, based on the loaded pre-processing result. For example, the neural network processing unit 210 may input the pre-processing result to a first computation layer of the neural network model and perform computation on the first computation layer.

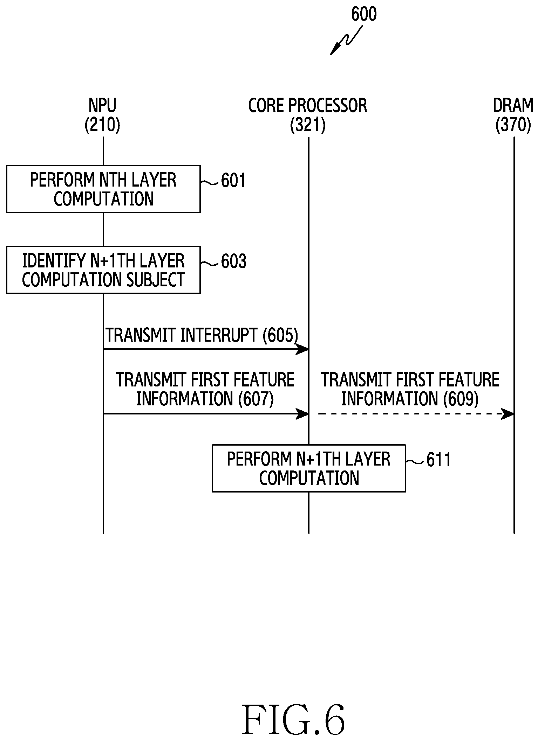

FIG. 6 is a flowchart 600 illustrating a process for performing computation on a computation layer included in a neural network model by a core processor (e.g., at least one core processor 321 of FIG. 3) of a central processing unit (e.g., central processing unit 220 of FIGS. 2 and 3) of an electronic device (e.g., electronic device 101 of FIGS. 1 and 2) according to an embodiment.

In operation 601, a neural network processing unit 210 may perform computation on a second computation layer. The second computation layer is a layer before a first computation layer being an N+1th computation layer among a plurality of computation layers included in a neural network model, and is an Nth computation layer in the neural network model. For example, when the second computation layer is the first in order in the neural network model, the neural network processing unit 210 may input the pre-processing result loaded in operation 509 of FIG. 5 to the second computation layer, and perform computation on the second computation layer. For example, when the second computation layer is the second or later in the neural network model, the neural network processing unit 210 may input a value output from an N-1th computation layer, to the second computation layer, and perform computation on the second computation layer. The neural network processing unit 210 may obtain first feature information (e.g., feature map) that is output by performing the computation on the second computation layer.

In operation 603, the neural network processing unit 210 may identify a subject for performing computation on the first computation layer that is the N+1th as the next order. For example, a transformer, which is a neural network usable in the language field or the vision field, may include a plurality of softmax layers. Here, when the neural network processing unit 210 does not support softmax computation, the neural network processing unit 210 may identify that the computation on the first computation layer should be performed by a central processing unit (e.g., central processing unit 220 of FIG. 2 or FIG. 3).

In operation 605, the neural network processing unit 210 may transmit an interrupt signal to at least one core processor 321, based on the subject of computation on the first computation layer. In response to the computation subject identified in operation 603 being the at least one core processor 321, the interrupt signal may be transmitted by an interrupt controller (e.g., interrupt controller 311 of FIG. 3) of the neural network processing unit 210.

The neural network processing unit 210 may transmit, to the DRAM 370, the first feature information that is obtained by performing the computation on the second computation layer. Referring to FIG. 3, a direct memory access (e.g., direct memory access 317 of FIG. 3) may transmit the first feature information to the DRAM 370 via a path (e.g., DSU 330, CCI 340, system cache / bus 350, and memory controller 360 of FIG. 3) going from an interconnect (e.g., interconnect 230 of FIGS. 2 and 3), an arbiter (e.g., arbiter 221 of FIGS. 2 and 3), a cache memory

(e.g., cache memory 223 of FIGS. 2 and 3), and a central processing unit (e.g., central processing unit 220 of FIGS. 2 and 3) to the DRAM 370. The direct memory access (e.g., direct memory access 317 of FIG. 3) may transfer the first feature information to the arbiter (e.g., arbiter 221 of FIGS. 2 and 3) through the interconnect (e.g., interconnect 230 of FIGS. 2 and 3). The arbiter (e.g., arbiter 221 of FIGS. 2 and 3) may transfer the first feature information received from the interconnect (e.g., interconnect 230 of FIGS. 2 and 3), to the cache memory (e.g., cache memory 223 of FIGS. 2 and 3). Referring to FIG. 6, the first feature information may be transferred 607 from the neural network processing unit 210 to the cache memory (e.g., cache memory 223 of FIGS. 2 and 3) of the core processor 321 via the interconnect (e.g., interconnect 230 of FIGS. 2 and 3) and the arbiter (e.g., arbiter 221 of FIGS. 2 and 3). The first feature information may be transferred 609 to the DRAM 370 via the cache memory (e.g., cache memory 223 of FIGS. 2 and 3) of the core processor 321. In a procedure in which the first feature information is transferred to the DRAM 370 via the cache memory (e.g., cache memory 223 of FIGS. 2 and 3), the first feature information may be written to the cache memory (e.g., cache memory 223 of FIGS. 2 and 3).

In operation 611, in order to perform computation on the first computation layer being the N+1th computation layer, the core processor 321 may read the first feature information. Here, since the first feature information is written to the cache memory (e.g., cache memory 223 of FIGS. 2 and 3) of the core processor 321, the core processor 321 may obtain the first feature information from the cache memory (e.g., cache memory 223 of FIGS. 2 and 3). Therefore, the core processor 321 may obtain the first feature information without overhead occurring for accessing the DRAM 370. The core processor 321 may input the obtained first feature information to the first computation layer and perform the computation on the first computation layer.

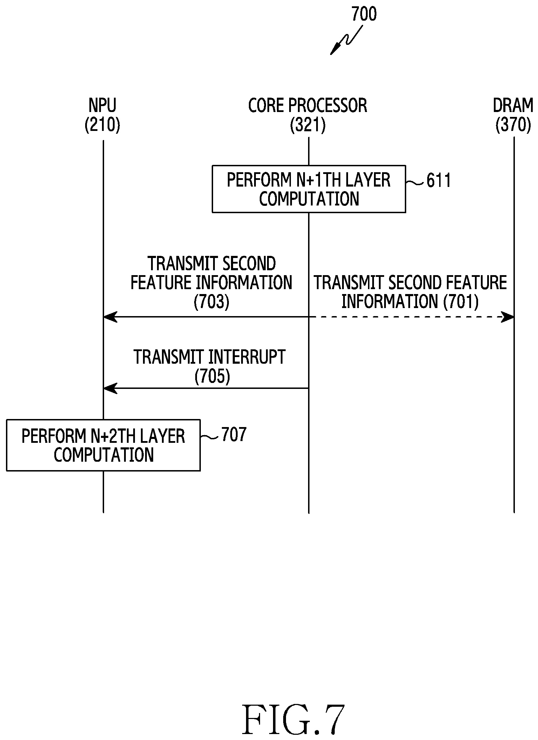

FIG. 7 is a flowchart 700 illustrating a process for performing computation on a next computation layer by a neural network processing unit, based on the result of computation on a computation layer performed by a core processor (e.g., at least one core processor 321 of FIG. 3) of a central processing unit (e.g., central processing unit 220 of FIGS. 2 and 3) of an electronic device (e.g., electronic device 101 of FIGS. 1 and 2) according to an embodiment.

In operation 611, the core processor 321 may perform computation on a first computation layer being an N+1th computation layer in a neural network model. For example, the core processor 321 may obtain second feature information that is output by inputting first feature information to the first computation layer.

In operation 701, in response to the completion of the computation on the first computation layer, the core processor 321 may transmit the obtained second feature information to DRAM 370. Referring to FIG. 3, a processing circuit (e.g., processing circuit 323 of FIG. 3) of the core processor 321 may transmit the second feature information to the DRAM 370 via a path

(e.g., DSU 330, CCI 340, system cache / bus 350, and memory controller 360 of FIG. 3) going from an arbiter (e.g., arbiter 221 of FIGS. 2 and 3), a cache memory (e.g., cache memory 223 of FIGS. 2 and 3), and a central processing unit (e.g., central processing unit 220 of FIGS. 2 and 3) to the DRAM 370. The arbiter (e.g., arbiter 221 of FIGS. 2 and 3) may transfer the second feature information output from the processing circuit (e.g., processing circuit 323 of FIG. 3), to the cache memory 223.

In operation 703, the core processor 321 may transmit the second feature information to a neural network processing unit 210. For example, a direct memory access (e.g., direct memory access 317 of FIG. 3) may transmit the second feature information written to the cache memory (e.g., cache memory 223 of FIGS. 2 and 3), to SRAM (e.g., SRAM 315 of FIG. 3) of the neural network processing unit 210 through the arbiter (e.g., arbiter 221 of FIGS. 2 and 3) and the interconnect (e.g., interconnect 230 of FIGS. 2 and 3). The arbiter (e.g., arbiter 221 of FIGS. 2 and 3) may transfer the second feature information read from the cache memory 223, to the neural network processing unit 210 through the interconnect 230. In operation 705, the core processor 321 may transmit an interrupt signal for allowing to perform computation on a third computation layer that is an N+2th computation layer in the neural network model, to the neural network processing unit 210.

In operation 707, in response to the received interrupt signal, the neural network processing unit 210 may perform the computation on the third computation layer, based on the second feature information. For example, the neural network processing unit 210 may input the second feature information to the third computation layer and perform the computation on the third computation layer.

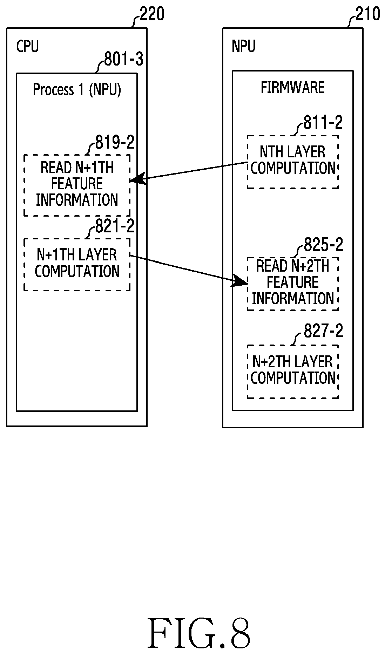

FIG. 8 is a diagram illustrating an operation in which a neural network processing unit 210 and a central processing unit 220 communicate without going through a memory and perform neural network computation according to an embodiment.

A central processing unit may execute a process for performing computation that is based on a neural network model. The central processing unit may initialize a neural network processing unit and transfer a start command for neural network computation to the neural network processing unit. The central processing unit may process another process while the neural network processing unit performs computation on computation layers in the neural network model.

The neural network processing unit may perform computation on an Nth computation layer in the neural network model. After performing the computation operation on the Nth computation layer, the neural network processing unit may identify that computation on an N+1th computation layer should be performed by the central processing unit. The neural network processing unit may perform an operation of storing feature information for performing the computation on the N+1th computation layer in a shared memory area of a memory. The feature information for performing the computation on the N+1th computation layer may include information that is obtained as the result of the computation on the Nth computation layer. In this operation, a memory access overhead may occur in order for the neural network processing unit to access a memory.

In response to identifying that the computation on the N+1th computation layer should be performed by the central processing unit, the neural network processing unit may transmit an interrupt signal to the central processing unit. The central processing unit receiving the interrupt signal may switch a process from another process to the process for performing the computation that is based on the neural network model. In a procedure of switching the process, a delay due to context switching may occur.

The central processing unit may perform an operation of reading feature information for performing the computation on the N+1th computation layer from a memory, based on a process. Here, a memory access overhead may occur again in order for the central processing unit to access the memory. The central processing unit may perform a computation operation on the N+1th computation layer, based on the read feature information. The central processing unit may perform an operation of storing feature information for performing computation on an N+2th computation layer in a shared memory area of the memory. The feature information for performing the computation on the N+2th computation layer may include information obtained as the result of performing the computation on the N+1th computation layer. In this operation, a memory access overhead may occur in order for the central processing unit to access the memory.

The neural network processing unit may perform an operation of reading the feature information for performing the computation on the N+2th computation layer from the memory. Here, a memory access overhead may occur in order for the neural network processing unit to access the memory. The neural network processing unit may perform a computation operation on the N+2th computation layer, based on the read feature information.

In contrast, referring to FIG. 8, the central processing unit 220 of an embodiment may be exclusively used by a process 801-3 for performing computation that is based on a neural network model. For example, while computations are performed on computation layers for which a corresponding parameter (parameter indicating whether a core processor is exclusively used) is set to ON, at least one processor (e.g., at least one core processor 321 of FIG. 3) of the central processing unit 220 may execute only the process 801-3. Accordingly, while the process 801-3 is executed, a delay due to context switching may be prevented.

The neural network processing unit 210 of an embodiment may perform a computation operation 811-2 on an Nth computation layer included in a neural network model. When a computation operation 821-2 on an N+1th computation layer should be performed by the central processing unit 220, the neural network processing unit 210 may transfer feature information for performing the computation on the N+1th computation layer, to a cache memory (e.g., L1 cache memory) of the central processing unit 220. The central processing unit 220 may perform an operation 819-2 for reading feature information for performing the computation on the N+1th computation layer, stored in the cache memory. Since the central processing unit 220 may read the feature information from the cache memory, the central processing unit 220 may obtain the feature information fast without a memory access overhead. The central processing unit 220 may perform the computation operation 821-2 on the N+1th computation layer, based on the feature information.

The result of performing the computation on the N+1th computation layer may be written to the cache memory of the central processing unit 220. The neural network processing unit 210 may perform an operation 825-2 of reading feature information written to the cache memory of the central processing unit 220. The feature information may include information obtained as the result of performing the computation on the N+1th computation layer. Since the neural network processing unit 210 of an embodiment may read the feature information written to the cache memory, a memory access overhead for accessing DRAM (e.g., DRAM 370 of FIG. 3) may be prevented. The neural network processing unit 210 may perform a computation operation 827-2 on an N+2th computation layer, based on the feature information obtained from the cache memory.

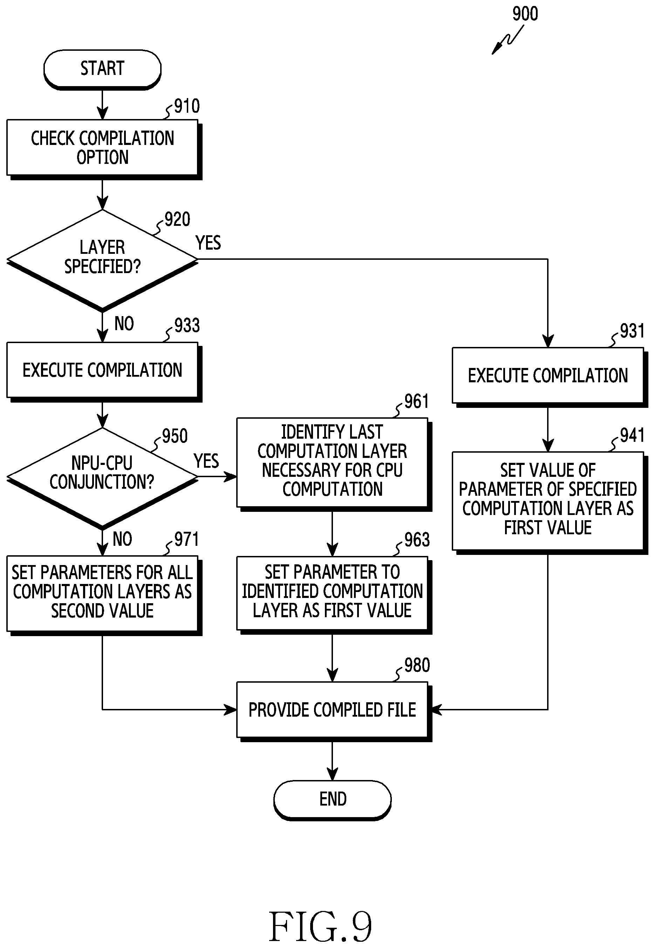

FIG. 9 is a flowchart 900 illustrating a process of compiling a file for executing a neural network model by an electronic device (e.g., electronic device 101 of FIGS. 1 and 2) according to an embodiment.

The process illustrated in FIG. 9 may be understood to be performed by a processor (e.g., processor 120 of FIG. 1 or central processing unit 220 of FIGS. 2 and 3) of the electronic device (e.g., electronic device 101 of FIGS. 1 and 2).

In operation 910, an electronic device (e.g., electronic device 101 of FIGS. 1 and 2) may check a compilation option that is a setting value for performing compilation. For example, the electronic device (e.g., electronic device 101 of FIGS. 1 and 2) may check a value specified by a user in relation to compilation for a neural network model. In operation 920, the electronic device (e.g., electronic device 101 of FIGS. 1 and 2) may determine whether a computation layer specifying a parameter value about whether to exclusively use at least one process of a central processing unit is specified in the checked compilation option.

When the computation layer is specified in the compilation option (operation 920 - Yes), in operation 931, the electronic device (e.g., electronic device 101 of FIGS. 1 and 2) may execute compilation, based on the compilation option in which the computation layer is specified. When the compilation is executed based on the compilation option in which the computation layer is specified, in operation 941, a compiler may specify a parameter for the specified computation layer as a first value (e.g., on). In operation 941, the compiler may specify a parameter for the remaining computation layer as a second value (e.g., off) different from the first value. In operation 980, the electronic device (e.g., electronic device 101 of FIGS. 1 and 2) may provide a compiled file, based on the specified parameter.

When the computation layer is not specified in the compilation option (operation 920 - No), in operation 933, the electronic device (e.g., electronic device 101 of FIGS. 1 and 2) may execute compilation, based on the compilation option in which the computation layer is not specified. In operation 950, the electronic device (e.g., electronic device 101 of FIGS. 1 and 2) may determine whether the neural network processing unit (e.g., neural network processing unit 210 of FIGS. 2 and 3) and the central processing unit (e.g., central processing unit 220 of FIGS. 2 and 3) should execute a neural network model being a compilation target in conjunction with each other. For example, the electronic device (e.g., electronic device 101 of FIGS. 1 and 2) may determine whether computations included in respective neural layers included in the neural network model may be performed by the neural network processing unit (e.g., neural network processing unit 210 of FIGS. 2 and 3). When the neural network processing unit (e.g., neural network processing unit 210 of FIGS. 2 and 3) may not support a computation operation included in at least one neural layer, the electronic device (e.g., electronic device 101 of FIGS. 1 and 2) may determine that the neural network processing unit (e.g., neural network processing unit 210 of FIGS. 2 and 3) and the central processing unit (e.g., central processing unit 220 of FIGS. 2 and 3) should execute the neural network model in conjunction with each other.

When it is determined that the neural network processing unit (e.g., neural network processing unit 210 of FIGS. 2 and 3) and the central processing unit (e.g., central processing unit 220 of FIGS. 2 and 3) should execute the neural network model in conjunction with each other (operation 950 - Yes), in operation 961, the electronic device (e.g., electronic device 101 of FIGS. 1 and 2) may identify, by the compiler, the last computation layer that should be processed by the central processing unit (e.g., central processing unit 220 of FIGS. 2 and 3). For example, when the neural network model includes ten computation layers and the neural network processing unit (e.g., neural network processing unit 210 of FIGS. 2 and 3) does not support computations on the 1st, 3rd, and 5th computation layers, the electronic device (e.g., electronic device 101 of FIGS. 1 and 2) may identify the 5th computation layer as the last computation layer.

In operation 963, the electronic device (e.g., electronic device 101 of FIGS. 1 and 2) may set values of parameters corresponding from the 1st computation layer to the identified last computation layer, as a first value (e.g., on), by using the compiler. The electronic device (e.g., electronic device 101 of FIGS. 1 and 2) may set values of parameters corresponding to the remaining layers, as a second value (e.g., off) different from the first value. For example, when the 5th computation layer in the order of computation among the ten computation layers is the last computation layer, parameter values for the 1st, 2nd, 3rd, 4th, and 5th computation layers in the order of computation may be set to on, and parameter values for the 6th, 7th, 8th, 9th, and 10th computation layers in the order of computation may be set to off. In operation 980, the electronic device (e.g., electronic device 101 of FIGS. 1 and 2) may provide a compiled file, based on the set parameter value.

The electronic device (e.g., electronic device 101 of FIGS. 1 and 2) may determine that the neural network processing unit (e.g., neural network processing unit 210 of FIGS. 2 and 3) and the central processing unit (e.g., central processing unit 220 of FIGS. 2 and 3) do not need to execute the neural network model in conjunction with each other (operation 950 - No). For example, when computations on all computation layers may be processed by the neural network processing unit (e.g., neural network processing unit 210 of FIGS. 2 and 3), the electronic device (e.g., electronic device 101 of FIGS. 1 and 2) may determine that the neural network processing unit (e.g., neural network processing unit 210 of FIGS. 2 and 3) and the central processing unit (e.g., central processing unit 220 of FIGS. 2 and 3) do not need to execute the neural network model in conjunction with each other. In operation 971, the electronic device (e.g., electronic device 101 of FIGS. 1 and 2) may set values of parameters for all the computation layers as the second value (e.g., off). In operation 980, the electronic device (e.g., electronic device 101 of FIGS. 1 and 2) may provide a compiled file, based on the set parameter value.

Various embodiments may present an electronic device and an operating method therefor, which may reduce a delay occurring in a procedure of performing communication between a central processing unit and a neural network processing unit.

Various embodiments may present an electronic device and an operating method therefor, which may allow a neural network processing unit to flexibly correspond to a newly proposed operation, by allowing at least one of a plurality of core processors of a composite core central processing unit (CPU) to transfer information to the neural network processing unit without accessing a memory.

Effects obtainable from the disclosure are not limited to the effects mentioned above, and other effects not mentioned may be clearly understood by those skilled in the art to which the disclosure pertains from the description below.

An electronic device of an embodiment may include a memory, and a processor operatively connected to the memory. The processor may include a central processing unit including a cache memory, a neural network processing unit, and an interconnect connected to the neural network processing unit. The central processing unit may include an arbiter for connecting the cache memory to any one of a processing circuit of the central processing unit or the interconnect. The neural network processing unit may be configured to exchange data with the cache memory through the arbiter

According to an embodiment, the neural network processing unit may include a direct memory access connected to the interconnect. The direct memory access may be configured to transmit or receive feature data with the arbiter through the interconnect. The feature data may include data that is input to or output from a computation layer of a neural network model.

According to an embodiment, the direct memory access may be configured to convert a first data format used in the neural network processing unit into a second data format used in the central processing unit, and transmit the feature data from the neural network processing unit to the central processing unit.

In an embodiment, the central processing unit may include a plurality of core processors. The neural network processing unit may be configured to be connected to at least one of the plurality of core processors through the interconnect.

The electronic device of an embodiment may further include dynamic random access memory outside the processor. The interconnect may be configured to connect the dynamic random access memory to any one of the arbiter and a cache coherent interconnect that is connectable to the dynamic random access memory.

In an embodiment, the neural network processing unit may include an interrupt controller. The interrupt controller may be configured to be connected to the at least one core processor and transmit an interrupt signal to the at least one core processor.

In an embodiment, the neural network processing unit may determine whether computation on a first computation layer included in neural network computation should be performed by the central processing unit. In response to determining that the computation on the first computation layer should be performed by the central processing unit, the neural network processing unit may transmit an interrupt signal to the at least one core processor through the interrupt controller. The neural network processing unit may be configured to transfer first feature information to be input to the first computation layer, to the at least one core processor through the interconnect.

In an embodiment, the first feature information may include information that is output from a second computation layer included in the neural network computation by performing computation on the second computation layer by the neural network processing unit.

The at least one core processor of the electronic device of an embodiment may be configured to perform the computation on the first computation layer, based on the first feature information, and obtain second feature information. The neural network processing unit may be configured to receive an interrupt from the at least one core processor. The neural network processing unit may be configured to perform computation on a third computation layer included in the neural network computation, based on the second feature information obtained from the at least one core processor.

The at least one core processor of the electronic device of an embodiment may be configured to execute a neural network computation process for performing neural network computation. The at least one core processor may be configured to perform pre-processing on an input value for performing the neural network computation, based on the neural network computation process. The at least one core processor may be configured to initialize the neural network processing unit, and transfer the result of the pre-processing to the neural network processing unit through the interconnect.

The central processing unit of the electronic device of an embodiment may be configured to store a parameter defining whether to exclusively use the at least one core processor. The central processing unit may be configured to, when the parameter is a first value, allow a neural network computation process for performing neural network computation to exclusively use the at least one core processor. The central processing unit may be configured to, when the parameter is a second value different from the first value, allow the at least one core processor to further perform another process.

The central processing unit of the electronic device of an embodiment may be configured to compile to include the parameter, and provide a file of a neural network model.

The central processing unit of the electronic device of an embodiment may be configured to, in a procedure of compiling the file of the neural network model, identify at least one computation layer on which computation should be performed by the central processing unit, among a plurality of computation layers included in the neural network computation. The central processing unit may be configured to, in the compiling procedure, specify values of parameters for each of the plurality of computation layers, based on the identified at least one computation layer.

An operating method of an electronic device of an embodiment may include executing neural network computation by a neural network processing unit of the electronic device. The method may include controlling an arbiter included in a central processing unit of the electronic device to connect a cache memory of the central processing unit to an interconnect connected to the neural network processing unit. The method may include receiving data for performing the executed neural network computation by the neural network processing unit, from the cache memory through the arbiter, or transmitting the data to the cache memory through the arbiter.

In an embodiment, the operating method of the electronic device may further include determining, by the neural network processing unit, whether computation on a first computation layer included in the neural network computation should be performed by the central processing unit. The method may include transmitting, by the neural network processing unit, an interrupt signal to the central processing unit, in response to determining that the computation on the first computation layer should be performed by the central processing unit. The method may further include transferring, by the neural network processing unit, first feature information to be input to the first computation layer, to the central processing unit through the interconnect.

In an embodiment, the first feature information may include information that is output from a second computation layer included in the neural network computation by performing computation on the second computation layer by the neural network processing unit.

In an embodiment, the method may include performing, by the central processing unit, the computation on the first computation layer, based on the first feature information, and obtaining second feature information. The method may include receiving, by the neural network processing unit, an interrupt from the central processing unit. The method may include obtaining, by the neural network processing unit, the second feature information from the central processing unit. The method may further include performing computation on a third computation layer included in the neural network computation, based on the second feature information.

A processor of an embodiment may include a central processing unit including a cache memory, a neural network processing unit, and an interconnect connected to the neural network processing unit. The central processing unit may include an arbiter for connecting the cache memory to any one of a processing circuit of the central processing unit or the interconnect. The neural network processing unit may be configured to exchange data with the cache memory through the arbiter.

In an embodiment, the neural network processing unit may include a direct memory access connected to the interconnect. The direct memory access may be configured to transmit or receive feature data with the arbiter through the interconnect. The feature data may include data that is input to or output from a computation layer of a neural network model.

In an embodiment, the central processing unit may include a plurality of core processor. The neural network processing unit may be configured to be connected to at least one of the plurality of core processors through the interconnect.

The methods of embodiments described in the claims or specification of the disclosure may be implemented in the form of hardware, software, or a combination of hardware and software.

When the methods are implemented by software, a computer-readable storage medium that stores one or more programs (software modules) may be presented. The one or more programs stored in the computer-readable storage medium are configured to be executable by one or more processors within an electronic device. The one or more programs include instructions of allowing the electronic device to execute the methods of the embodiments described in the claims or specification of the disclosure.

These programs (software modules and software) may be stored in random access memory, non-volatile memory including flash memory, read only memory (ROM), electrically erasable programmable ROM (EEPROM), magnetic disc storage device, compact disc-ROM (CD-ROM), digital versatile discs (DVDs) or other types of optical storage devices, and magnetic cassette. Alternately, the programs may be stored in a memory composed of a combination of some or all of them. In addition, each composed memory may be included in multiples as well.

In addition, the program may be stored in an attachable storage device that may be accessed via a communication network such as Internet, intranet, local area network (LAN), wide LAN (WLAN), storage area network (SAN), or a combination thereof. The storage device may be connected to a device performing an embodiment of the disclosure via an external port. Also, a separate storage device on a communication network may be connected to a device performing an embodiment of the disclosure as well.

In the specific embodiments of the disclosure described above, components included in the disclosure have been expressed singularly or plurally according to the specific embodiments presented. However, the expression of singular or plural is selected appropriately for the presented situation for the convenience of explanation, and the disclosure is not limited to singular or plural components, and even a component expressed as plural may be constructed as singular or even a component expressed as singular may be constructed as plural.

Also, in the disclosure, the terms "unit", "module", etc. may include a hardware component such as a processor or a circuit, and/or a software component executed by the hardware component such as the processor.

"Unit" and "module" may be also implemented by a program that may be stored in an addressable storage medium and executed by the processor. For example, "unit" and "module" may be implemented by components, such as software components, object-oriented software components, class components, and task components, processes, functions, properties, procedures, subroutines, segments of a program code, drivers, firmware, microcode, circuits, data, databases, data structures, tables, arrays, and variables.

Specific executions described in the disclosure are only an embodiment and do not limit the scope of the disclosure in any way. For the sake of brevity, the description of conventional electronic components, control systems, software, and other functional aspects of the systems may be omitted.

Also, in the disclosure, "including at least one of a, b, or c" may mean "including only a", "including only b", "including only c", "including a and b", "including b and c", "including a and c", or "including all of a, b, and c".

Meantime, in the detailed description of the disclosure, specific embodiments have been described, but it is undoubted that various modifications are possible without departing from the scope of the disclosure. Therefore, the scope of the disclosure should not be limited to the described embodiments, and should be defined not only by the scope of the claims described later but also by those equivalent to the scope of the claims.

## Claims

1. An electronic device comprising:
a memory; and
a processor operatively connected to the memory,
wherein the processor comprises:
a central processing unit comprising a cache memory;
a neural network processing unit; and
an interconnect connected to the neural network processing unit,
the central processing unit comprises an arbiter for connecting the cache memory to any one of a processing circuit of the central processing unit or the interconnect, and
the neural network processing unit is configured to exchange data with the cache memory through the arbiter

2. The electronic device of claim 1, wherein the neural network processing unit comprises a direct memory access connected to the interconnect,
the direct memory access is configured to transmit or receive feature data with the arbiter through the interconnect, and
the feature data comprises data that is input to or output from a computation layer of a neural network model.

3. The electronic device of claim 2, wherein the direct memory access is configured to convert a first data format used in the neural network processing unit into a second data format used in the central processing unit, and transmit the feature data from the neural network processing unit to the central processing unit.

4. The electronic device of claim 1, wherein the central processing unit comprises a plurality of core processors, and
the neural network processing unit is configured to be connected to at least one of the plurality of core processors through the interconnect.

5. The electronic device of claim 4, further comprising dynamic random access memory outside the processor,
wherein the interconnect is configured to connect the dynamic random access memory to any one of the arbiter and a cache coherent interconnect which is connectable to the dynamic random access memory.

6. The electronic device of claim 4, wherein the neural network processing unit comprises an interrupt controller, and
the interrupt controller is connected to the at least one core processor and transmits an interrupt signal to the at least one core processor.

7. The electronic device of claim 6, wherein the neural network processing unit is configured to:
determine whether computation on a first computation layer comprised in neural network computation should be performed by the central processing unit;
in response to determining that the computation on the first computation layer should be performed by the central processing unit, transmit an interrupt signal to the at least one core processor through the interrupt controller; and
transfer first feature information to be input to the first computation layer, to the at least one core processor through the interconnect.

8. The electronic device of claim 7, wherein the first feature information comprises information that is output from a second computation layer comprised in the neural network computation by performing computation on the second computation layer by the neural network processing unit.

9. The electronic device of claim 7, wherein the at least one core processor is configured to perform the computation on the first computation layer, based on the first feature information, and obtain second feature information, and
the neural network processing unit is configured to:
receive an interrupt from the at least one core processor;
obtain the second feature information from the at least one core processor; and
perform computation on a third computation layer comprised in the neural network computation, based on the second feature information.

10. The electronic device of claim 4, wherein the at least one core processor is configured to:
execute a neural network computation process for performing neural network computation;
obtain an input value for performing the neural network computation;
perform pre-processing on the input value, based on the neural network computation process;
initialize the neural network processing unit; and
transfer the result of the pre-processing to the neural network processing unit through the interconnect.

11. The electronic device of claim 4, wherein the central processing unit is configured to:
store a parameter defining whether to exclusively use the at least one core processor;
based on the parameter being a first value, allow a neural network computation process for performing neural network computation to exclusively use the at least one core processor; and
based on the parameter being a second value different from the first value, allow the at least one core processor to further perform another process.

12. The electronic device of claim 11, wherein the central processing unit is configured to compile to comprise the parameter, and provide a file of a neural network model.

13. The electronic device of claim 12, wherein the central processing unit is configured to, in a procedure of compiling the file of the neural network model:
identify at least one computation layer on which computation should be performed by the central processing unit, among a plurality of computation layers comprised in the neural network computation; and
specify values of parameters for each of the plurality of computation layers, based on the identified at least one computation layer.

14. An operating method of an electronic device, comprising:
executing neural network computation by a neural network processing unit of the electronic device;
controlling an arbiter comprised in a central processing unit of the electronic device to connect a cache memory of the central processing unit to an interconnect connected to the neural network processing unit; and
receiving data for performing the executed neural network computation by the neural network processing unit, from the cache memory through the arbiter, or transmitting the data to the cache memory through the arbiter.

15. The operating method of claim 14, further comprising:
determining, by the neural network processing unit, whether computation on a first computation layer comprised in the neural network computation should be performed by the central processing unit;
transmitting, by the neural network processing unit, an interrupt signal to the central processing unit, in response to determining that the computation on the first computation layer should be performed by the central processing unit; and
transferring, by the neural network processing unit, first feature information to be input to the first computation layer, to the central processing unit through the interconnect.
